# EUROPEAN PATENT SPECIFICATION

(11) **EP 3 675 237 B1**
(45) Date of publication and mention of the grant of the patent: **15.06.2022**
(21) Application number: 19858627.3
(22) Date of filing: 15.10.2019
(51) Int. Cl.: H01M 10/04, H01M 50/103, H01M 50/15, H01M 50/538, H01M 50/543, H01M 50/579

(54) **SECONDARY BATTERY COMRPSISING A TOP CLAMPING PLATE**
SEKUNDÄRBATTERIE BEINHALTEND EINE OBERE KLEMMPLATTE
BATTERIE SECONDAIRE COMPRENANT UNE PLAQUE DE SERRAGE SUPÉRIEURE

(30) Priority: 30.10.2018 CN 201821776352 U
(43) Date of publication of application: 01.07.2020
(73) Proprietor: Contemporary Amperex Technology Co., Limited, Jiaocheng District Ningde City Fujian 352100 (CN)
(72) Inventor: ZHU, Baojian, Ningde City Fujian 352100 (CN); CHEN, Lei, Ningde City Fujian 352100 (CN); XU, Shoujiang, Ningde City Fujian 352100 (CN); FENG, Chunyan, Ningde City Fujian 352100 (CN)
(74) Representative: Grey, Ian Michael
(86) International application number: PCT/CN2019/111201
(87) International publication number: WO 2020/088240

(56) References cited:
- CN-A- 105 591 062
- CN-A- 107 579 172
- CN-A- 107 978 699
- CN-A- 108 615 830
- CN-U- 208 955 087
- US-A1- 2017 271 630
- US-A1- 2018 114 954

## Description

### FIELD

The present disclosure relates to the technical field of battery, and in particular to a top compression plate, a secondary battery and a method for manufacturing a secondary battery.

### BACKGROUND

A secondary battery generally includes an electrode assembly, a case, and a top cover assembly. The electrode assembly is formed by winding a positive electrode plate, a negative electrode plate, and a separator disposed between the positive electrode plate and the negative electrode plate together around a winding axis. A positive active material is coated on a coating region of the positive electrode plate, while a negative active material is coated on a coating region of the negative electrode plate. A plurality of uncoated regions extending from the coating region of a main body are laminated to form a tab. The electrode assembly includes two tabs, i.e., a positive tab and a negative tab. The positive tab extends from the coating region of the positive electrode plate while the negative tab extends from the coating region of the negative electrode plate. The electrode assembly is accommodated in the case, and the top cover assembly is assembled with the case and is disposed corresponding to an end of the electrode assembly along the winding axis. The top cover assembly includes a cap plate and an electrode terminal disposed on the cap plate, wherein the tabs of the electrode assembly are electrically connected to the electrode terminals of the top cover assembly. However, the secondary battery will vibrate in use, so the electrode assembly will move in the case, which will cause the tabs to constantly bend back and forth. In this way, the tabs are susceptible to breakage after being repeatedly bent.

US2017/271630A1 discloses a secondary battery including: a top cover, a first electrode terminal, a second electrode terminal, an electrode-tab pad-plate, an electrode assembly, a first electrode-tab and a second electrode-tab; the first and second electrode terminal are arranged on the top cover, the electrode-tab pad-plate is a strip-plate shaped structure, and is located between the top cover and electrode assembly, the first electrode-tab includes a connecting part, a folding part and a welding part, the connecting part is located at upside of the electrode-tab pad-plate, the welding part is located at downside thereof, the connecting part is connected with the electrode assembly, the welding part is connected with the first electrode terminal, the folding part is connected with the connecting part and welding part bypassing the electrode-tab pad-plate; the second electrode terminal is connected with the electrode assembly through the second electrode-tab. US2018114954A1 discloses a secondary battery including: a case having an internal space; an electrode assembly inserted in the case and including a first electrode plate, a second electrode plate, and a separator between the first electrode plate and the second electrode plate; a cap plate sealing the case, electrically connected to the first electrode plate of the electrode assembly, and including a safety vent on a region of the cap plate; an upper insulation member on the cap plate; a sub terminal plate on the upper insulation member and electrically connected to the safety vent through a connector part extending at an end of the sub terminal plate; and a terminal plate making contact with and coupled to a top portion of the upper insulation member and coupled to the sub terminal plate.

### SUMMARY

Embodiments of the present disclosure provide a top compression plate, a secondary battery and a method for manufacturing a secondary battery. The top compression plate when being applied in the secondary battery restricts the positioning of the electrode assembly within the case, keeps the position of the electrode assembly in a stable state, reduces the possibility of breakage of the tab resulted from the movement of the main body, and improves the safety of the secondary battery in use.

The top compression plate when being applied in the secondary battery is disposed between the cap plate and the main body of the electrode assembly. The top compression plate presses against the main body, thus restricts the positioning of the main body within the case, effectively prevents the main body from moving in the case, reduces the possibility of breakage of the tab resulted from the movement of the main body, and improves the safety of the secondary battery in use.

In another aspect, an embodiment of the present disclosure provides a secondary battery, including:
a cap plate; an electrode terminal disposed on the cap plate; an electrode assembly which includes a main body and a tab connected to the main body, wherein the tab is connected to the electrode terminal; an insulating member disposed between the cap plate and the main body, wherein the insulating member includes a connecting protrusion extending toward the main body; and a top compression plate disposed between the insulating member and the main body, wherein the top compression plate includes a first surface facing the main body and a mounting hole mating with the connecting protrusion, and a top end surface of the connecting protrusion does not exceed the first surface,
the mounting hole is a through hole, and the mounting hole includes a connecting hole section and a receiving hole section which is in communication with the connecting hole section, and the receiving hole section includes an opening toward the main body; and
the connecting protrusion is connected to the connecting hole section such that the insulating member and the top compression plate are fixedly connected, the connecting protrusion passes through the connecting hole section, and the top end surface is located in the receiving hole section or is flush with the first surface,
the connecting protrusion includes two elastic legs disposed at an interval, each elastic leg has a shape at its outer surface which matches with that of a hole wall of the connecting hole section, and the outer surface is pressed against the hole wall.

According to another aspect of the embodiment of the present disclosure, the connecting protrusion is plug-in connected with the connecting hole section, and the connecting protrusion and the connecting hole section form an interference fit.

According to another aspect of the embodiment of the present disclosure, the top compression plate includes a first end portion and a second end portion which are oppositely disposed along a length direction of the cap plate, each of the first end portion and the second end portion includes the mounting hole, and the connecting protrusions and the mounting holes have a one-to-one correspondence in terms of their numbers and positions.

According to another aspect of the embodiment of the present disclosure, the receiving hole section on the first end portion has a hole diameter smaller than that of the receiving hole section on the second end portion.

According to another aspect of the embodiment of the present disclosure, the first end portion includes two said mounting holes which are arranged at an interval along a width direction of the cap plate.

According to another aspect of the embodiment of the present disclosure, the second end portion includes two said mounting holes which are arranged at an interval along a width direction of the cap plate.

According to another aspect of the embodiment of the present disclosure, the insulating member includes a first insulator and a second insulator, the first insulator and the second insulator are disposed at an interval along a length direction of the cap plate, and each of the first insulator and the second insulator includes the connecting protrusion.

According to another aspect of the embodiment of the present disclosure, the secondary battery further includes a connecting plate, the tab includes a free end far from the main body, the free end is connected to the electrode terminal through the connecting plate, the top compression plate includes a receiving slot, and both the free end and the connecting plate are accommodated in the receiving slot.

According to the embodiment of the present disclosure, the secondary battery includes a case, an electrode assembly, a top cover assembly, and a top compression plate. The case and the top cover assembly are sealingly connected to seal the electrode assembly inside the case. The top compression plate is disposed in the case, and the top compression plate fixes the electrode assembly. Since the top compression plate is disposed between the insulating member and the main body of the electrode assembly, the top compression plate fixes the electrode assembly to ensure stable positioning of the electrode assembly in the case, reduces the possibility of breakage of the tab resulted from the movement of the main body, and improves the safety of secondary battery in use.

### BRIEF DESCRIPTION OF THE DRAWINGS

The features, advantages, and technical effects of the exemplary embodiments of the present disclosure will be described below with reference to the drawings.
Fig. 1 is an exploded structural diagram of a secondary battery according to an embodiment of the present disclosure;
Fig. 2 is an exploded structural diagram of a secondary battery according to another embodiment of the present disclosure;
Fig. 3 is a schematic structural diagram of a top compression plate according to an embodiment of the present disclosure;
Fig. 4 is a schematic diagram of a top compression plate and an insulating member in a connection state according to an embodiment of the present disclosure;
Fig. 5 is a partially enlarged view at a portion A in Fig. 4;
Fig. 6 is a schematic diagram of an insulating member and a cap plate in a connection state according to an embodiment of the present disclosure;
Fig. 7 is a partially enlarged view of a portion B in Fig. 6;
Fig. 8 is a partial cross-sectional structure diagram of a secondary battery according to an embodiment of the present disclosure;
Fig. 9 is a flowchart of a method for manufacturing a secondary battery according to an embodiment of the present disclosure.

In the drawings, the drawings are not drawn to actual scale.

Reference signs in the drawings:
- 10: case;
- 20: electrode assembly;
- 201: main body;
- 202: tap;
- 202a: connecting end;
- 202b: intermediate section;
- 202c: free end;
- 30: cap plate;
- 40: electrode terminal;
- 50: insulating member;
- 50a: first insulator;
- 50b: second insulator;
- 501: connecting protrusion;
- 501a: top end surface;
- 502: elastic leg;
- 60: top compression plate;
- 600a: first surface;
- 600b: second surface;
- 60a: first end portion;
- 60b: second end portion;
- 601: mounting hole;
- 601a: connecting hole section;
- 601b: receiving hole section;
- 602: receiving slot;
- 70: connecting plate;
- X: length direction; and
- Y: width direction.

### DETAILED DESCRIPTION

The present disclosure will be further described in detail below with reference to the drawings and the embodiments. The detailed description and drawings of the following embodiments are used to exemplarily illustrate the principle of the present disclosure, but cannot be used to limit the scope of the disclosure. Thus, the disclosure is not limited to the described embodiments.

In the description of the present disclosure, it should be noted that, unless otherwise stated, the meaning of "a plurality" is two or more; the orientation or positional relationship indicated by the terms "upper", "lower", "left", "right", "inner", "outer" and the like are orientation or positional relationship based on the orientation shown in the drawings; it is merely simplified for convenience of describing the present disclosure and simplification of the description, and does not indicate or imply that the pointed device or element must have a particular orientation, be constructed and operated in a specific orientation, and therefore should not be construed as limiting the present disclosure.

In the description of the present disclosure, it should be noted that, unless otherwise stated, the terms "installation", "connected to", and "connected with" are to be understood broadly, and may be, for example, a fixed connection, a disassemble connection, or an integral connection; they can be connected directly or indirectly through an intermediate medium. The specific meaning of the above terms in the present disclosure can be understood by the person skilled in the art according to actual circumstance.

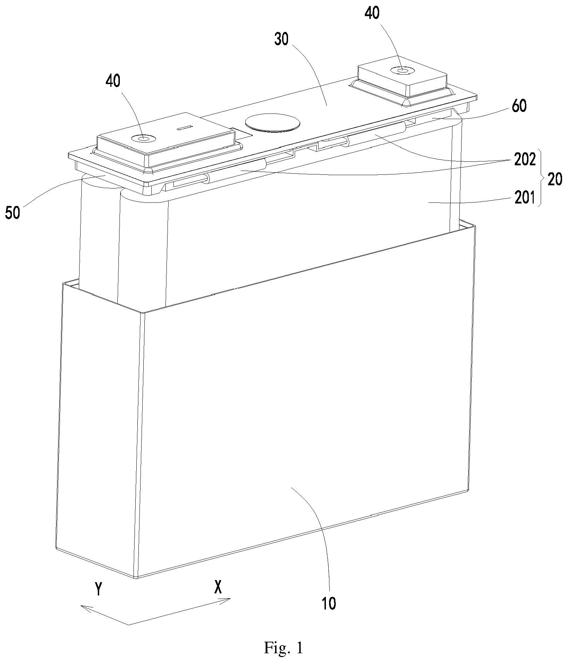

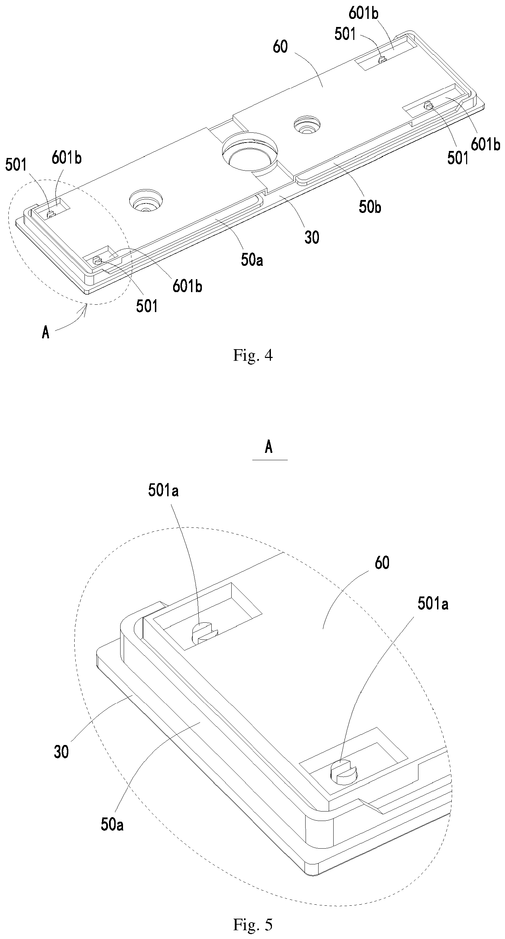

For better understanding of the disclosure, a secondary battery according to embodiments of the disclosure will be described below in detail with reference to Figs. 1 to 9.

As shown in Fig. 1, the secondary battery according to an embodiment of the present disclosure includes a case 10, an electrode assembly 20 disposed in the case 10, and a top cover assembly sealingly connected to the case 10.

The housing 10 according to the embodiment may have a hexahedron shape or other shapes. The case 10 according to the embodiment includes an internal space for accommodating the electrode assembly 20 and electrolyte. The housing 10 according to the embodiment may be made of a material such as aluminum or an aluminum alloy. The top cover assembly according to the embodiment includes a cap plate 30 and an electrode terminal 40 disposed on the cap plate 30. The top cover assembly is sealingly connected to the case 10 through the cap plate 30. The cap plate 30 according to the embodiment has a predetermined length and width.

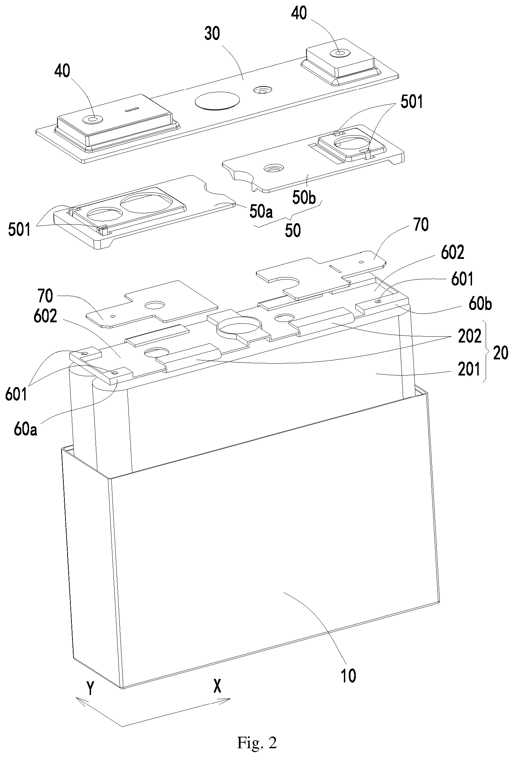

With continued reference to Fig. 2, the electrode assembly 20 according to the embodiment of the present disclosure includes a main body 201 and a tab 202 connected to the main body 201. The electrode assembly 20 is connected to the electrode terminal 40 through the tab 202. In this embodiment, the main body 201 is formed by spirally winding a first electrode plate, a second electrode plate, and a separator together around a winding axis. The separator is an insulator between the first electrode plate and the second electrode plate. The main body 201 according to the embodiment has a flat overall structure, and has a predetermined thickness, height, and width. In the embodiment, the description is made by exemplarily taking the first electrode plate as a positive electrode plate and the second electrode plate as a negative electrode plate. Similarly, in other embodiments, the first electrode plate may be a negative electrode plate, and the second electrode plate may be a positive electrode plate. Furthermore, a positive active material is coated on a coating region of the positive electrode plate, while a negative active material is coated on a coating region of the negative electrode plate. A plurality of uncoated regions extending from the coating region of the main body 201 are laminated, thus the laminated uncoated regions serve as the tab 202. The electrode assembly 20 includes two tabs 202, i.e., a positive tab and a negative tab. The positive tab extends from the coating region of the positive electrode plate while the negative tab extends from the coating region of the negative electrode plate.

The top cover assembly according to the embodiment further includes an insulating member 50. The insulating member 50 is disposed between the cap plate 30 and the main body 201. The insulating member 50 includes a connecting protrusion 501 extending toward the main body 201. The insulating member 50 may be fixedly connected to the cap plate 30. The insulating member 50 is applied to physically separate the cap plate 30 from the main body 201 of the electrode assembly 20.

The secondary battery according to the embodiment further includes a top compression plate 60. The top compression plate 60 is disposed between the insulating member 50 and the main body 201. The top compression plate 60 includes a first surface 600a facing the main body 201 and a second surface 600b facing away from the main body 201. The first surface 600a and the second surface 600b are oppositely disposed along a thickness direction of the top compression plate 60. The thickness direction of the top compression plate 60 is the same as a thickness direction of the cap plate 30. The first surface 600a and the second surface 600b are oppositely disposed along a height direction (which is perpendicular to both a length direction X and a width direction Y) of the secondary battery. After the secondary battery is assembled, the first surface 600a of the top compression plate 60 will apply a compressive force to the main body 201 to restrict the whole electrode assembly 20 through the main body 201 and prevent the electrode assembly 20 from moving up and down in the case 10. The top compression plate 60 includes a mounting hole 601. The mounting hole 601 extends from the second surface 600b toward the first surface 600a. The connecting protrusion 501 of the insulating member 50 mates with the mounting hole 601 such that the insulating member 50 and the top compression plate 60 are fixed to each other. The connecting protrusion 501 of the insulating member 50 includes a top end surface 501a facing the main body 201. The top end surface 501a of the connecting protrusion 501 does not exceed the first surface 600a of the top compression plate 60.

The secondary battery according to the embodiment of the present disclosure includes a case 10, an electrode assembly 20, a top cover assembly and a top compression plate 60. The case 10 and the top cover assembly are sealingly connected to seal the electrode assembly 20 inside the case 10. The top compression plate 60 is disposed in the case 10, and the top compression plate 60 fixes the electrode assembly 20. Since the top compression plate 60 is disposed between the insulating member 50 and the main body 201 of the electrode assembly 20, the top compression plate 60 fixes the electrode assembly 20 to ensure the stable positioning of the electrode assembly 20 in the case 10. The possibility of breakage of the tab 202 due to its frequent bending resulted from the movement of the main body 201 can be reduced, and the safety of secondary battery in use can be improved. Furthermore, the insulating member 50 of the top cover assembly includes a connecting protrusion 501, and the top compression plate 60 includes a mounting hole 601. The connecting protrusion 501 of the insulating member 50 is connected to the mounting hole 601 of the top compression plate 60, such that the position of the top compression plate 60 is limited and restricted by the insulating member 50, and the top compression plate 60 does not move within the case 10. Then, during the assembling of the secondary battery, the top compression plate 60 does not damage the electrode plate or the separator of the main body 201 due to the movement of the top compression plate 60. Since the connecting protrusion 501 of the insulating member 50 does not exceed the first surface 600a of the top compression plate 60, the top end surface 501a of the connecting protrusion 501 does not apply compressive force to the main body 201. Accordingly, the possibility that the connecting protrusion 501 of the insulating member 50 causes local compressive damage to the electrode plate or the separator of the main body 201 can be reduced, and the safety of the secondary battery can be improved.

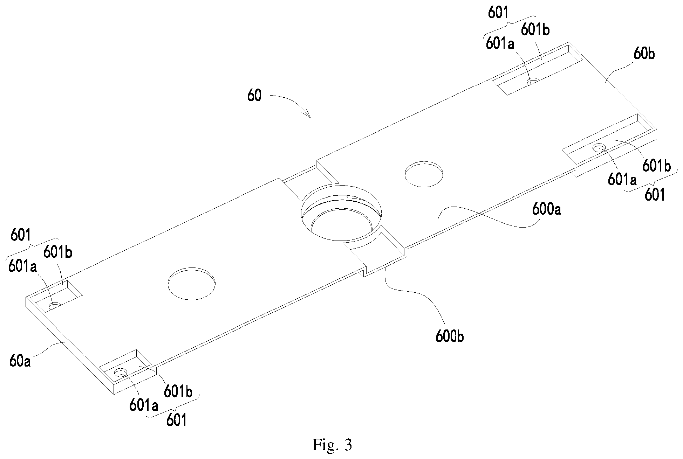

Referring to Fig. 3, the mounting hole 601 of the top compression plate 60 according to the embodiment is a through hole. The through hole extends from the second surface 600b to the first surface 600a. The mounting hole 601 includes a connecting hole section 601a and a receiving hole section 601b which is in communication with the connecting hole section 601a. The diameter of the receiving hole section 601b is larger than that of the connecting hole section 601a, such that the length of the connecting hole section 601a is reduced, and thus the influence of the manufacturing error of the connecting hole section 601a on the connecting protrusion 501 during the assembling process is reduced. The receiving hole section 601b is close to the main body 201 and includes an opening toward the main body 201, while the connecting hole section 601a is close to the insulating member 50. The connecting protrusion 501 according to the embodiment is connected to the connecting hole section 601a, such that the insulating member 50 and the top compression plate 60 are fixedly connected. The connecting protrusion 501 passes through the connecting hole section 601a, and the top end surface 501a is located in the receiving hole section 601b or is flush with the first surface 600a of the top compression plate 60 facing the main body 201. Since the first surface 600a of the top compression plate 60 is used to apply the compressive force to the main body 201, the top end surface 501a of the connecting protrusion 501 which does not exceed the first surface 600a of the top compression plate 60 does not apply force to the main body 201, such that the connecting protrusion 501 does not cause local compressive damage to the electrode plate and/or the separator of the main body 201.

The connecting protrusion 501 according to the embodiment is plug-in connected with the connecting hole section 601a, and the connecting protrusion 501 and the connecting hole section 601a form an interference fit. The connecting protrusion 501 and the connecting hole section 601a are connected with an interference fit, which ensures a stable connection between the connecting protrusion 501 and the top compression plate 60, reduces the number of components, and ensures that the connecting protrusion 501 and the connecting hole section 601a can be connected quickly with a high assembly efficiency.

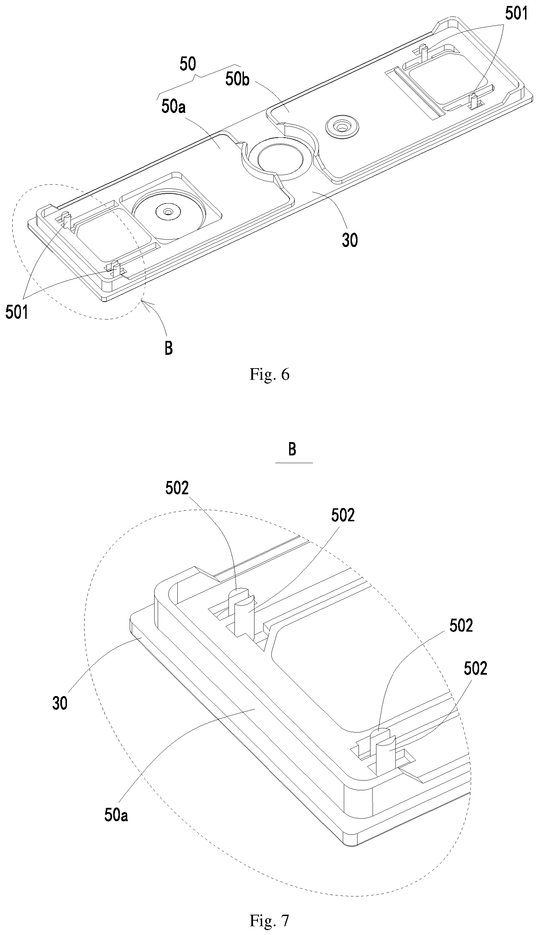

Referring to Figs. 6 and 7, the connecting protrusion 501 according to the embodiment includes two elastic legs 502 disposed at an interval. The shape of the outer surface of each elastic leg 502 matches with the shape of the hole wall of the connecting hole section 601a, and the outer surface is pressed against the hole wall. During the process of inserting the connecting protrusion 501 into the mounting hole 601, the two elastic legs 502 will be retracted to easily enter the connecting hole section 601a. After being installed in a predetermined position, the elastic legs 502 will apply greater compressive forces to the hole wall of the connecting hole section 601a due to elastic restoring forces of the elastic legs 502. Therefore, the friction between the connecting protrusion 501 and the hole wall of the connecting hole section 601a is increased, such that the connection between the connecting protrusion 501 and the top compression plate 60 is more stable and reliable. In one example, the elastic leg 502 includes a hook at its top end. After the top end of the elastic leg 502 passes through the connecting hole section 601a, the hook will clamp a step surface between the connecting hole section 601a and the receiving hole section 601b, such that the elastic leg 502 cannot easily come out of the mounting hole 601, which further improves the stable connection between the connecting portion 501 and the top compression plate 60.

In one embodiment, the connecting hole section 601a has a circular cross section, and the receiving hole section 601b has a rectangular cross section. Each elastic leg 502 has a circular sector cross section as one fifth to one half of a full circle.

The top compression plate 60 according to the embodiment includes a first end portion 60a and a second end portion 60b which are oppositely disposed along a length direction of the top compression plate 60. The length direction of the top compression plate 60 is the same as the length direction X of the cap plate 30. Each of the first end portion 60a and the second end portion 60b includes a mounting hole 601. The number and positions of the connecting protrusions 501 correspond to the number and positions of the mounting holes 601 in a one-to-one correspondence. As the mounting holes 601 are provided at both end portions of the top compression plate 60 and the connecting protrusions 501 are correspondingly provided at the insulating member 50, there will be more connection points between the insulating member 50 and the top compression plate 60, the stable connection between the connecting protrusions 501 and the top compression plate 60 will be further effectively improved, and the moving possibility of the top compression plate 60 will be reduced.

According to the embodiment, the receiving hole section 601b on the first end portion 60a of the top compression plate 60 has a hole diameter smaller than that of the receiving hole section 601b on the second end portion 60b. Accordingly, the top compression plate 60 has a poka-yoke function to avoid mounting error in the assembling of the top compression plate 60, and effectively improves the efficiency and accuracy of the assembly process.

According to the embodiment, the first end portion 60a of the top compression plate 60 includes two mounting holes 601. The two mounting holes 601 are arranged at an interval along the width direction Y of the cap plate 30. Accordingly, after the two connecting protrusions 501 and the two mounting holes 601 have been mated with each other, the top compression plate 60 is prevented from rotating, and the main body 201 is prevented from being scratched by the top compression plate 60 as the top compression plate 60 rotates. The width direction of the top compression plate 60 is the same as the width direction Y of the cap plate 30. Furthermore, the second end portion 60b of the top compression plate 60 includes two mounting holes 601. The two mounting holes 601 are arranged at an interval along the width direction Y of the cap plate 30. In this way, the first end portion 60a and the second end portion 60b of the top compression plate 60 are both restrained, so that the top compression plate 60 does not rotate, and the main body 201 is prevented from being scratched by the top compression plate 60 as the top compression plate 60 rotates.

Referring to Fig. 6, the insulating member 50 according to the embodiment includes a first insulator 50a and a second insulator 50b. The first insulator 50a and the second insulator 50b are disposed at an interval along the length direction X of the cap plate 30. Each of the first insulator 50a and the second insulator 50b includes a connecting protrusion 501. A clearance gap is formed between the first insulator 50a and the second insulator 50b. The cap plate 30 includes a relief valve corresponding to the clearance gap. When there is an over high pressure in the secondary battery, the relief valve is opened, air flow can be smoothly and quickly discharged through the clearance gap and the opened relief valve. Moreover, the separate structure of the insulating member 50 can reduce an overall weight of the insulating member 50 and is beneficial to increase the energy density of the secondary battery.

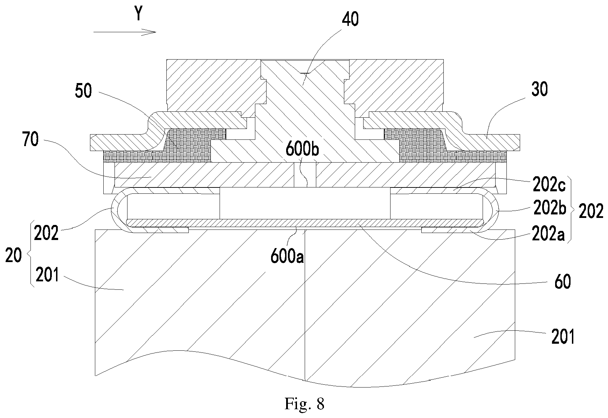

As shown in Fig. 8, the secondary battery according to the embodiment further includes a connecting plate 70. The tab 202 includes a free end 202c far from the main body 201, a connecting end 202a connected to the main body 201, and an intermediate section 202b for connecting the free end 202c and the connecting end 202a. The free end 202c is connected to the electrode terminal 40 through the connecting plate 70. In one example, the free end 202c is welded to the connecting plate 70. The top compression plate 60 includes a receiving slot 602. The receiving slot 602 is recessed from the second surface 600b toward the first surface 600a. Both the free end 202c and the connecting plate 70 are accommodated in the receiving slot 602. In this way, in one aspect, the tab 202, the connecting plate 70 and the top compression plate 60 have a small overall height, which effectively saves the internal space of the case 10 and is beneficial to improve the energy density of the secondary battery. In another aspect, as the tab 202 is fixedly connected to the connecting plate 70 by welding, when welding slag is generated in the welding area of the secondary battery in the assembly process or in use, the receiving slot 602 of the top compression plate 60 will collect the welding slag to effectively prevent the welding slag from dropping on the main body 201. It reduces the possibility that the welding slag punctures the electrode plate or the separator of the main body 201, and improves the safety of the secondary battery. In yet another aspect, the top compression plate 60 according to the embodiment physically separates the welding area between the tab 202 and the connecting plate 70 from the main body 201.

The secondary battery according to the embodiment of the present disclosure includes a top compression plate 60 capable of applying a compressive force to the main body 201 of the electrode assembly 20. The top compression plate 60 effectively restrains and restricts the main body 201 to prevent the main body 201 from moving up and down in the case 10, ensures the stable positioning of the electrode assembly 20 in the case 10. The possibility of breakage of the tab 202 due to its frequent bending resulted from the movement of the main body 201 can be reduced, and the safety of secondary battery in use can be improved. Moreover, the insulating member 50 of the top cover assembly includes a connecting protrusion 501, and the top compression plate 60 includes a mounting hole 601. The connecting protrusion 501 of the insulating member 50 is connected to the mounting hole 601 of the top compression plate 60, such that the position of the top compression plate 60 is limited and restricted by the insulating member 50, and the top compression plate 60 does not move within the case 10. Then, during the assembling of the secondary battery, the top compression plate 60 does not damage the electrode plate or the separator of the main body 201 due to the movement of the top compression plate 60. Since the connecting protrusion 501 of the insulating member 50 does not exceed the first surface 600a of the top compression plate 60, the top end surface 501a of the connecting protrusion 501 does not apply compressive force to the main body 201. Accordingly, the possibility that the connecting protrusion 501 of the insulating member 50 causes local compressive damage to the electrode plate or the separator of the main body 201 can be reduced, and the safety of the secondary battery can be improved.

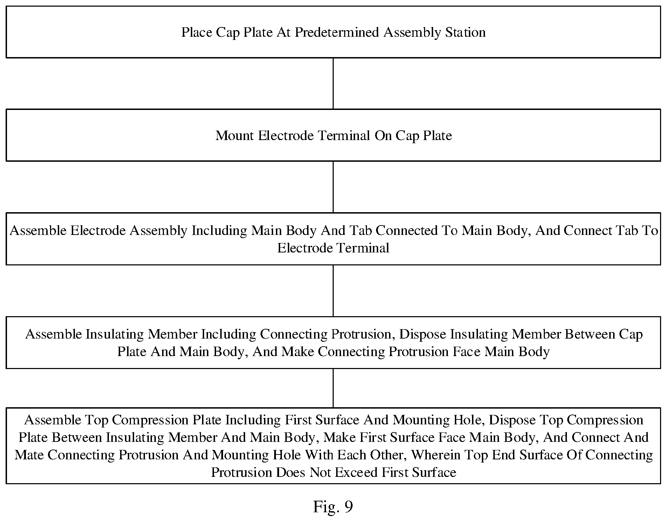

Referring to Fig. 9, an embodiment of the present disclosure provides a method for manufacturing a secondary battery, which includes:
placing a cap plate 30 at a predetermined assembly station;
mounting an electrode terminal 40 on the cap plate 30;
assembling an electrode assembly 20, which includes a main body 201 and a tab 202 connected to the main body 201, and connecting the tab 202 to the electrode terminal 40;
assembling an insulating member 50, which includes a connecting protrusion 501, disposing the insulating member 50 between the cap plate 30 and the main body 201, and making the connecting protrusion 501 face the main body 201; and
assembling a top compression plate 60, which includes a first surface 600a and a mounting hole 601, disposing the top compression plate 60 between the insulating member 50 and the main body 201, and making the first surface 600a face the main body 201, and connecting and mating the connecting protrusion 501 and the mounting hole 601 with each other, wherein the top end surface 501a of the connecting protrusion 501 does not exceed the first surface 600a.

Although the disclosure has been described with reference to the preferred embodiments, various modifications may be made to the disclosure and components may be replaced with equivalents without departing from the scope of the disclosure. In particular, the technical features mentioned in the various embodiments can be combined in any manner as long as there is no structural conflict. The disclosure is not limited to the specific embodiments disclosed herein, but comprises all technical solutions falling within the scope of the claims.

## Claims

1. A secondary battery, **characterized in that** the secondary battery comprises:
a cap plate (30);
an electrode terminal (40) disposed on the cap plate (30);
an electrode assembly (20) which comprises a main body (201) and a tab (202) connected to the main body (201), wherein the tab (202) is connected to the electrode terminal (40);
an insulating member (50) disposed between the cap plate (30) and the main body (201), wherein the insulating member (50) comprises a connecting protrusion (501) extending toward the main body (201); and
a top compression plate (60) disposed between the insulating member (50) and the main body (201), wherein the top compression plate (60) comprises a first surface (600a) facing the main body (201) and a mounting hole (601) mating with the connecting protrusion (501), and a top end surface (501a) of the connecting protrusion (501) does not exceed the first surface (600a),
the mounting hole (601) is a through hole, and the mounting hole (601) comprises a connecting hole section (601a) and a receiving hole section (601b) which is in communication with the connecting hole section (601a), and the receiving hole section (601b) comprises an opening toward the main body (201); and
the connecting protrusion (501) is connected to the connecting hole section (601a) such that the insulating member (50) and the top compression plate (60) are fixedly connected, the connecting protrusion (501) passes through the connecting hole section (601a), and the top end surface (501a) is located in the receiving hole section (601b) or is flush with the first surface (600a),
the connecting protrusion (501) comprises two elastic legs (502) disposed at an interval, each elastic leg (502) has a shape at its outer surface which matches with that of a hole wall of the connecting hole section (601a), and the outer surface is pressed against the hole wall.

2. The secondary battery according to claim 1, **characterized in that** the connecting protrusion (501) is plug-in connected with the connecting hole section (601a), and the connecting protrusion (501) and the connecting hole section (601a) form an interference fit.

3. The secondary battery according to claim 1 or 2, **characterized in that** the top compression plate (60) comprises a first end portion (60a) and a second end portion (60b) which are oppositely disposed along a length direction of the cap plate (30), each of the first end portion (60a) and the second end portion (60b) comprises the mounting hole (601), and the connecting protrusions (501) and the mounting holes (601) have a one-to-one correspondence in terms of their numbers and positions.

4. The secondary battery according to claim 3, **characterized in that** the receiving hole section (601b) on the first end portion (60a) has a hole diameter smaller than that of the receiving hole section (601b) on the second end portion (60b).

5. The secondary battery according to claim 3, **characterized in that** the first end portion (60a) comprises two said mounting holes (601) which are arranged at an interval along a width direction of the cap plate (30); and/or the second end portion (60b) comprises two said mounting holes (601) which are arranged at an interval along a width direction of the cap plate (30).

6. The secondary battery according to claim 1 or 2, **characterized in that** the insulating member (50) comprises a first insulator (50a) and a second insulator (50b), the first insulator (50a) and the second insulator (50b) are disposed at an interval along a length direction of the cap plate (30), and each of the first insulator (50a) and the second insulator (50b) comprises the connecting protrusion (501).

7. The secondary battery according to claim 1 or 2, **characterized in that** the secondary battery further comprises a connecting plate (70), the tab (202) comprises a free end (202c) far from the main body (201), the free end (202c) is connected to the electrode terminal (40) through the connecting plate (70), the top compression plate (60) comprises a receiving slot (602), and both the free end (202c) and the connecting plate (70) are accommodated in the receiving slot (602).

## Patentansprüche

1. Sekundärbatterie, **dadurch gekennzeichnet, dass** die Sekundärbatterie umfasst:
eine Abdeckplatte (30);
einen Elektrodenanschluss (40), der auf der Abdeckplatte (30) angeordnet ist;
eine Elektrodenanordnung (20), die einen Hauptkörper (201) und eine mit dem Hauptkörper (201) verbundene Lasche (202) umfasst, wobei die Lasche (202) mit dem Elektrodenanschluss (40) verbunden ist;
ein Isolierelement (50), das zwischen der Abdeckplatte (30) und dem Hauptkörper (201) angeordnet ist, wobei das Isolierelement (50) einen Verbindungsvorsprung (501) umfasst, der sich zu dem Hauptkörper (201) erstreckt; und
eine obere Kompressionsplatte (60), die zwischen dem Isolierelement (50) und dem Hauptkörper (201) angeordnet ist, wobei die obere Kompressionsplatte (60) eine dem Hauptkörper (201) zugewandte erste Oberfläche (600a) und ein Montageloch (601), der mit dem Verbindungsvorsprung (501) zusammenpasst, umfasst, und eine obere Endfläche (501a) des Verbindungsvorsprungs (501) nicht über die erste Fläche (600a) hinausgeht,
das Montageloch (601) ein Durchgangsloch ist, und das Montageloch (601) einen Verbindungslochabschnitt (601a) und einen mit dem Verbindungslochabschnitt (601a) in Verbindung stehenden Aufnahmelochabschnitt (601b) umfasst, der Aufnahmelochabschnitt (601b) eine Öffnung zum Hauptkörper (201) umfasst; und
der Verbindungsvorsprung (501) mit dem Verbindungslochabschnitt (601a) so verbunden ist, dass das Isolierelement (50) und die obere Kompressionsplatte (60) fest verbunden sind, der Verbindungsvorsprung (501) durch den Verbindungslochabschnitt (601a) hindurchgeht und sich die obere Endfläche (501a) in dem Aufnahmelochabschnitt (601b) befindet oder bündig mit der ersten Fläche (600a) ist,
der Verbindungsvorsprung (501) zwei elastische Schenkel (502) umfasst, die in einem Abstand angeordnet sind, jeder elastische Schenkel (502) an seiner Außenfläche eine Form hat, die mit der einer Lochwand des Verbindungslochabschnitts (601a) zusammenpasst, und die Außenfläche gegen die Lochwand gedrückt wird.

2. Sekundärbatterie nach Anspruch 1, **dadurch gekennzeichnet, dass** der Verbindungsvorsprung (501) durch Steckverbindung mit dem Verbindungslochabschnitt (601a) verbunden ist, und der Verbindungsvorsprung (501) und der Verbindungslochabschnitt (601a) eine Presspassung bilden.

3. Sekundärbatterie nach Anspruch 1 oder 2, **dadurch gekennzeichnet, dass** die obere Kompressionsplatte (60) einen ersten Endabschnitt (60a) und einen zweiten Endabschnitt (60b) umfasst, die entlang einer Längsrichtung der Abdeckplatte (30) gegenüberliegend angeordnet sind, jeder von dem ersten Endabschnitt (60a) und dem zweiten Endabschnitt (60b) das Montageloch (601) umfasst, und die Verbindungsvorsprünge (501) und die Montagelöcher (601) eine Eins-zu-Eins-Beziehung Korrespondenz in Bezug auf ihre Nummern und Positionen haben.

4. Sekundärbatterie nach Anspruch 3, **dadurch gekennzeichnet, dass** der Aufnahmelochabschnitt (601b) an dem ersten Endabschnitt (60a) einen Lochdurchmesser hat, der kleiner als derjenige des Aufnahmelochabschnitts (601b) an dem zweiten Endabschnitt (60b) ist.

5. Sekundärbatterie nach Anspruch 3, **dadurch gekennzeichnet, dass** der erste Endabschnitt (60a) zwei sogenannte Montagelöcher (601) umfasst, die in einem Abstand entlang einer Breitenrichtung der Abdeckplatte (30) angeordnet sind; und/oder der zweite Endabschnitt (60b) zwei sogenannte Montagelöcher (601) umfasst, die in einem Abstand entlang einer Breitenrichtung der Abdeckplatte (30) angeordnet sind.

6. Sekundärbatterie nach Anspruch 1 oder 2, **dadurch gekennzeichnet, dass** das Isolierelement (50) einen ersten Isolator (50a) und einen zweiten Isolator (50b) umfasst, der erste Isolator (50a) und der zweite Isolator (50b) in einem Abstand entlang einer Längsrichtung der Abdeckplatte (30) angeordnet sind, und jeder von dem ersten Isolator (50a) und dem zweiten Isolator (50b) den Verbindungsvorsprung (501) umfasst.

7. Sekundärbatterie nach Anspruch 1 oder 2, **dadurch gekennzeichnet, dass** die Sekundärbatterie ferner eine Verbindungsplatte (70) umfasst, die Lasche (202) ein freies Ende (202c) weit von dem Hauptkörper (201) umfasst, das freie Ende (202c) mit dem Elektrodenanschluss (40) durch die Verbindungsplatte (70) verbunden ist, die obere Kompressionsplatte (60) einen Aufnahmeschlitz (602) umfasst und sowohl das freie Ende (202c) als auch die Verbindungsplatte (70) im Aufnahmeschlitz (602) untergebracht ist.

## Revendications

1. Batterie secondaire, **caractérisée en ce que** la batterie secondaire comprend :
une plaque de couvercle (30) ;
une borne d'électrode (40) disposée sur la plaque de couvercle (30) ; et
un composant d'électrode (20) comprenant un corps principal (201) et une languette (202) connectée au corps principal (201), la languette (202) étant électriquement connectée à la borne d'électrode (40) ;
un élément isolant (50) disposé entre la plaque de couvercle (30) et le corps principal (201), l'élément isolant (50) comprenant une saillie de connexion (501) s'étendant vers le corps principal (201) ; et
une plaque de pression supérieure (60) disposée entre l'élément isolant (50) et le corps principal (201), la plaque de pression supérieure (60) comprenant une première surface (600a) en face au corps principal (201) et un trou de montage (601) coopérant à la saillie de connexion (501), et une surface d'extrémité supérieure (501a) de la saillie de connexion (501) ne dépassant pas la première surface (600a),
le trou de montage (601) étant un trou traversant, et le trou de montage (601) comprenant une section de trou de connexion (601a) et une section de trou de réception (601b) en communication avec la section de trou de connexion (601a), et la section de trou de réception (601b) comprenant une ouverture vers le corps principal (201) ; et
la saillie de connexion (501) étant connectée à la section de trou de connexion (601a) de sorte que l'élément isolant (50) et la plaque de pression supérieure (60) étant connectés de manière fixe, la saillie de connexion (501) passant à travers la section de trou de connexion (601a), et la surface d'extrémité supérieure (501a) étant située dans la section de trou de réception (601b) ou affleurant la première surface (600a),
la saillie de connexion (501) comprenant deux pieds élastiques (502) disposées à un intervalle, chaque pied élastique (502) présentant une forme au niveau de sa surface extérieure qui correspond à celle d'une paroi de trou de la section trou de connexion (601a), et la surface extérieure s'appuyant contre la paroi du trou.

2. Batterie secondaire selon la revendication 1, **caractérisée en ce que** la saillie de connexion (501) est connectée de manière d'insertion à la section de trou de connexion (601a), et la saillie de connexion (501) et la section de trou de connexion (601a) forment un ajustement sans jeu.

3. Batterie secondaire selon la revendication 1 ou 2, **caractérisée en ce que** la plaque de pression supérieure (60) comprend une première portion d'extrémité (60a) et une seconde portion d'extrémité (60b) disposées en opposée le long d'une direction de longueur de la plaque de couvercle (30), chacune de la première portion d'extrémité (60a) et de la seconde portion d'extrémité (60b) comprenant le trou de montage (601), et la saillie de connexion (501) et le trou de montage (601) présentant une correspondance biunivoque en terme de leur nombre et de leur position.

4. Batterie secondaire selon la revendication 3, **caractérisée en ce que** la section de trou de réception (601b) sur la première portion d'extrémité (60a) a un diamètre de trou inférieur à celui de la section de trou de réception (601b) sur la seconde portion d'extrémité (60b).

5. Batterie secondaire selon la revendication 3, **caractérisée en ce que** la première portion d'extrémité (60a) comprend deux trous de montage latéraux (601) agencés à un intervalle le long d'une direction de largeur de la plaque de couvercle (30) ; et/ou la seconde portion d'extrémité (60b) comprend deux trous de montage latéraux (601) agencés à un intervalle le long d'une direction de largeur de la plaque de couvercle (30).

6. Batterie secondaire selon la revendication 1 ou 2, **caractérisée en ce que** l'élément isolant (50) comprend un premier isolant (50a) et un second isolant (50b), le premier isolant (50a) et le second isolant (50b) étant disposés à un intervalle le long d'une direction de longueur de la plaque de couvercle (30), et chacun du premier isolant (50a) et du second isolant (50b) comprenant la saillie de connexion (501).

7. Batterie secondaire selon la revendication 1 ou 2, **caractérisée en ce que** la batterie secondaire comprend en outre une plaque de connexion (70), la languette (202) comprend une extrémité libre (202c) éloignée du corps principal (201), l'extrémité libre ( 202c) est connectée à la borne d'électrode (40) par l'intermédiaire de la plaque de connexion (70), la plaque de pression supérieure (60) comprend une fente de réception (602), et l'extrémité libre (202c) et la plaque de connexion (70) sont toutes logé dans la fente de réception (602).
